# EUROPÄISCHE PATENTSCHRIFT

(11) **EP 2 672 419 B1**
(45) Veröffentlichungstag und Bekanntmachung des Hinweises auf die Patenterteilung: **21.07.2021**
(21) Anmeldenummer: 13170885.1
(22) Anmeldetag: 06.06.2013
(51) Int. Cl.: G06F 21/64

(54) **Verfahren zum Erzeugen eines gesicherten Datenobjekts und System**
Method for producing a secured data object and system
Procédé de génération d'un objet de données sécurisé et système

(30) Priorität: 07.06.2012 DE 102012104947
(43) Veröffentlichungstag der Anmeldung: 11.12.2013
(73) Patentinhaber: cp.media AG, 6340 Baar (CH)
(72) Erfinder: Feller, Olaf, 68150 Ribeauville (FR); Brennecke, Burkhardt, 13088 Berlin (DE)
(74) Vertreter: Bittner, Thomas L.

(56) Entgegenhaltungen:
- EP-A1- 2 437 186
- WO-A1-99/40702
- US-A- 5 751 809
- None

## Beschreibung

Die Erfindung bezieht sich auf ein Verfahren zum Erzeugen eines gesicherten Datenobjekts und ein System.

### Hintergrund der Erfindung

In einer Vielzahl von medizinischen Handlungen kann es zu Streitigkeiten zwischen dem Patienten und dem medizinischen Personal über die Ergebnisse und Folgen der medizinischen Behandlung kommen.

So beispielsweise im Zusammenhang mit
- der nach Ansicht des Bundesgerichtshof in Form eines Gespräches zwischen Arzt und Patient und nicht mittels Formularen und Merkblättern durchzuführenden Eingriffsaufklärung über die Diagnose, die Therapie und den Verlauf, den Behandlungsalternativen sowie den Behandlungsrisiken einer bestimmten Erkrankung,
- medizinischen Operationen und
- der Betreuung des Patienten in den Bereichen der Notaufnahme und Intensivstationen,
insbesondere wenn beim Patienten Folgebeschwerden auftreten.

Zugleich fehlt aktuell eine audiovisuelle Archivierung des Operations- und / oder Behandlungsverlaufes, um bei möglichen Folgebehandlungen des Patienten dem dann behandelnden Arzt mit Zustimmung des Patienten objektive, zuverlässige Angaben über die gesundheitliche Vorgeschichte des Patienten zu erlangen.

Eine Videoaufhahme der Operation kann hierbei sowohl für den Arzt als auch den Patienten eine Hilfestellung für die Beweisführung bieten. Hierbei muss jedoch sicher gestellt sein, dass die Videoaufnahme tatsächlich alle Handlungen und Vorfälle während der Operation wiedergibt. Eine nachträgliche Manipulation des Videomaterials muss ausgeschlossen werden, damit das Video als Beweismittel eingesetzt werden kann.

Im Dokument EP 2 437 186 A1 ist ein Verfahren zum Erzeugen eines sicheren Datensatzes mittels einer Softwareapplikation, die auf einer Datenverarbeitungsanlage ausgeführt wird offenbart. Mit dem Verfahren können rechtssichere Bilddaten erstellt werden.

Das Dokument US 5,751,809 offenbart eine Vorrichtung und ein Verfahren zum sicheren Aufnehmen und Archivieren von Videodaten. Die Videodaten werden zusammen mit einem Zustandsparameter digital signiert und mit einem Zeitstempel versehen.

Ein Videoüberwachungssystem ist in dem Dokument WO 2010/139619 A1 beschrieben. Das System umfasst wenigstens eine Videokamera, einen Server zur Datenverarbeitung und Verschlüsselung sowie ein digitales Archiv für die Videodaten.

Das Dokument EP 2 437 186 A1 offenbart ein Verfahren zum Erzeugen eines sicheren Datensatzes und ein Verfahren zum Auswerten des Datensatzes. Ein kontinuierlicher Datenstrom wird in einem Zeitintervall in mehrere Sequenzen unterteilt. Den mehreren Sequenzen werden jeweils Hashwerte zugeordnet, die in einem Hashbaum angeordnet werden. Die Spitze des Hashbaumes entspricht dem Repräsentationswert des sequenzierten Datenstroms. Zu dem Repräsentationswert wird ein qualifizierter Zeitstempel empfangen und zusammen mit dem Datenobjekt in einer Datenbank abgespeichert.

Das Dokument WO 99/40702 A1 betrifft ein Verfahren zum Erzeugen eines sicheren Datensatzes und Prüfen desselben. Ein Datensatz wird in einzelne Datenpakete aufgeteilt, zu denen jeweils ein Hashwert erzeugt wird. Abhängig von der Größe der Datenpakete wird ein Hashbaum erzeugt. Die Spitze des Hashbaumes wird anschließend mit einer digitalen Signatur versehen.

### Zusammenfassung der Erfindung

Aufgabe der Erfindung ist es, ein Verfahren und ein System anzugeben, mit dem ein Datenobjekt erzeugt werden kann, so dass das Datenobjekt sicher vor Manipulationen ist.

Diese Aufgabe wird erfindungsgemäß durch ein Verfahren zum Erzeugen eines gesicherten Datenobjekts nach dem unabhängigen Anspruch 1 sowie ein System nach dem unabhängigen Anspruch 15 gelöst. Vorteilhafte Ausgestaltungen der Erfindung sind Gegenstand von abhängigen Unteransprüchen.

Nach einem Aspekt ist ein Verfahren nach Anspruch 1 offenbart.

Ein Beispiel betrifft ein Verfahren zum Erzeugen eines gesicherten Datenobjekts mittels einer Datenverarbeitungseinrichtung, wobei ein digitaler Datenstrom, der eine kontinuierliche Abfolge von Datensätzen umfasst, von der Datenverarbeitungsanlage empfangen wird, und das Verfahren die folgenden Schritte umfasst:
- Erzeugen von einem Datenrepräsentationswert jeweils am Ende eines Intervalls mit einer ersten Intervalllänge, welcher den Datensätzen des jeweiligen Intervalls erster Länge zugeordnet wird,
- Empfangen eines dem jeweiligen Datenrepräsentationswert zugeordneten ersten Zeitstempels,
- Speichern des jeweiligen Datenrepräsentationswertes zusammen mit dem zugeordneten ersten Zeitstempel,
- Erzeugen von einem Intervallrepräsentationswert jeweils am Ende eines Intervalls mit einer zweiten Intervalllänge, die größer ist als die erste Intervalllänge, der den Datenrepräsentationswerten des jeweiligen Intervalls zweiter Länge zugeordnet wird,
- Empfangen eines dem jeweiligen Intervallrepräsentationswert zugeordneten zweiten Zeitstempels, und
- Speichern des jeweiligen Intervallrepräsentationswertes zusammen mit dem zugeordneten zweiten Zeitstempel.

Nach einem weiteren Aspekt der Erfindung ist ein System offenbart, umfassend eine Videoaufnahmeeinrichtung, eine Datenverarbeitungseinrichtung und eine Datenspeichereinrichtung, wobei die Videoaufhahmeeinrichtung konfiguriert ist, einen Datenstrom an die Datenverarbeitungseinrichtung zu übertragen und die Datenverarbeitungseinrichtung konfiguriert ist, den Datenstrom zu bearbeiten und anschließend in der Datenspeichereinrichtung als gesichertes Datenobjekt abzuspeichern.

Das Verfahren wird mittels einer Datenverarbeitungseinrichtung ausgeführt. Die Datenverarbeitungseinrichtung kann beispielsweise einen oder mehrere Prozessoren sowie einen Speicher mit einem flüchtigen (z.B. Arbeitsspeicher) und / oder einem nicht flüchtigen (z.B. Festplatte) Speicherbereich aufweisen. Des Weiteren kann die Datenverarbeitungseinrichtung Kommunikationseinrichtungen zum Empfangen und / oder Senden von Daten und / oder Datenströmen aufweisen, beispielsweise einen Netzwerkanschluss (*LAN* - *local area network*)*,* einen Anschluss für ein kabelloses Netzwerk (*WLAN* - *wireless local area network*)*,* einen USB-Anschluss (*USB* - *universal serial bus*)*,* einen Bluetooth-Adapter und / oder einen Firewire-Anschluss (IEEE 1394). Die Datenverarbeitungseinrichtung kann mit einer Anzeigeeinrichtung verbunden sein. Alternativ kann eine Anzeigeeinrichtung in die Datenverarbeitungseinrichtung integriert sein.

Gemäß dem erfindungsgemäßen Verfahren ist eine Schachtelung von Zeitstempeln vorgesehen. Repräsentationswerte von Datenobjekten eines Datenstroms werden in bestimmten Intervallen mit Zeitstempeln versehen. Die Repräsentationswerte und die ihnen jeweils zugeordneten Zeitstempel werden zusammen abgespeichert. Das Verfahren zum Sichern des Datenstroms wird vom Anmelder auch als "SecStream" bezeichnet.

Elektronische Zeitstempel sind gemäß ISO18014-1 allgemein digitale Daten, mit denen die Existenz bestimmter Daten vor einem bestimmten Zeitpunkt bewiesen werden kann. Häufig, wie beispielsweise beim Time Stamp Protocol aus RFC3161, werden Zeitstempel unter Einsatz digitaler Signaturen erstellt. Somit sind Zeitstempel eine elektronische Bescheinigung darüber, dass die mit dem Zeitstempel signierten Daten zum Zeitpunkt der Signatur in der signierten Form vorgelegen haben.

Ein fortgeschrittener Zeitstempel (auch als fortgeschrittene elektronische Signatur bezeichnet) ist eine elektronische Signatur, die es ermöglicht, die Authentizität und Unverfälschtheit der durch sie signierten Daten zu prüfen. Gemäß der EG-Richtlinie 1999/93/EG soll ein fortgeschrittener Zeitstempel folgende Anforderungen erfüllen: Er soll ausschließlich einem Unterzeichner zugeordnet sein. Eine Identifizierung des Unterzeichners soll gewährleistet sein. Der fortgeschrittene Zeitstempel soll mit Mitteln erzeugt werden, die der Unterzeichner unter seiner alleinigen Kontrolle halten kann. Schließlich soll der fortgeschrittene Zeitstempel mit den Daten, auf die er sich bezieht, so verknüpft sein, dass eine nachträgliche Veränderung der Daten erkannt werden kann. Ein fortgeschrittener Zeitstempel wird in der Regel mittels einer Softwareapplikation erzeugt. Die Softwareapplikation ermöglicht es, verschiedene fortgeschrittene Zeitstempel in kurzem zeitlichem Abstand hintereinander zu erzeugen.

Unter einem qualifizierten Zeitstempel (auch als qualifizierte elektronische Signatur bezeichnet) wird eine fortgeschrittene elektronische Signatur verstanden, die auf einem zum Zeitpunkt ihrer Erzeugung gültigen qualifizierten Zertifikat beruht und mit einer sicheren Signaturerstellungseinheit (SSEE) erstellt wurde. Qualifizierte Zeitstempel können nur von akkreditierten Anbietern (*trusted timestamp authority*) erstellt werden. Elektronische Daten mit einem qualifizierten Zeitstempel sind für einen Zeitraum von mindestens 30 Jahren auf ihre Gültigkeit hin überprüfbar. Durch den qualifizierten Zeitstempel ist eine hohe Fälschungssicherheit der Daten gegeben. Der qualifizierte Zeitstempel wird in der Regel mittels einer Signaturkarte erstellt, die von einem Lesegerät ausgelesen wird. Das Erzeugen eines qualifizierten Zeitstempels dauert daher in der Regel länger, als das Erzeugen eines fortgeschrittenen Zeitstempels.

Ein qualifiziertes Zertifikat ist gemäß der EG-Richtlinie 1999/93/EG ein digitales Zertifikat, das die folgenden Inhalte aufweist: eine Angabe, dass das Zertifikat als qualifiziertes Zertifikat ausgestellt wird, eine Angabe des Ausstellers und des Staates, in dem er niedergelassen ist, den Namen des Inhabers oder ein Pseudonym, das als solches zu identifizieren ist, gegebenenfalls weitere Attribute des Inhabers, einen Signaturprüfschlüssel des Inhabers, Beginn und Ende der Gültigkeitsdauer des Zertifikats, eine Seriennummer des Zertifikats, die fortgeschrittene elektronische Signatur des ausstellenden Zertifizierungsdiensteanbieters, gegebenenfalls Beschränkungen des Geltungsbereichs des Zertifikats und gegebenenfalls Begrenzungen des Wertes der Transaktionen, für die das Zertifikat verwendet werden kann. Der Aussteller des qualifizierten Zertifikats muss die Anforderungen der Richtlinie an die Zuverlässigkeit und die Sicherheit seiner Zertifizierungsdienste erfüllen.

Die Eigenschaften der sicheren Signaturerstellungseinheit (SSEE) sind ebenfalls in der EG-Richtlinie 1999/93/EG definiert. Die SSEE soll gewährleisten, dass die erstellten Signatursschlüssel praktisch nur einmal auftreten können und ihre Geheimhaltung hinreichend gewährleistet ist. Des Weiteren sollen die Signaturschlüssel mit hinreichender Sicherheit nicht abgeleitet werden können und die Signatur vor Fälschungen bei Verwendung der jeweils verfügbaren Technologie geschützt sein. Schließlich sollen Signaturschlüssel von dem rechtmäßigen Unterzeichner vor der Verwendung durch andere verlässlich geschützt werden können. Die SSEE soll die zu unterzeichnenden Daten nicht verändern und nicht verhindern, dass diese Daten dem Unterzeichner vor dem Signaturvorgang dargestellt werden.

Das Erzeugen fortgeschrittener Zeitstempel skaliert mit der Prozessorleistung der Datenverarbeitungseinrichtung. Auf einem herkömmlichen Standardcomputer können beispielsweise fortgeschrittene Zeitstempel innerhalb von weniger als 50 ms erstellt werden. Für qualifizierte Zeitstempel ist die Zeit zum Erzeugen des Zeitstempels von der Technologie der Signaturerstellungseinheit (beispielsweise eine SmartCard) begrenzt. Für einen mit 2048 Bit nach dem RSA-Algorithmus (RSA - Rivest, Shamir und Adleman) verschlüsselten qualifizierten Zeitstempel werden etwa 1 bis 2 Sekunden benötigt.

Es kann vorgesehen sein, dass der erste Zeitstempel jeweils als fortgeschrittener oder qualifizierter Zeitstempel bereitgestellt wird. Des Weiteren kann vorgesehen sein, dass der zweite Zeitstempel jeweils als fortgeschrittener oder qualifizierter Zeitstempel bereitgestellt wird.

In einer bevorzugten Ausführungsform werden der erste und zweite Zeitstempel jeweils als fortgeschrittene Zeitstempel bereitgestellt. Diese Ausführungsform eignet sich insbesondere für die Anwendung auf mobilen Geräten, beispielsweise Smartphones oder Tablets. Bei mobilen Geräten ist der verfügbare Speicher in der Regel begrenzt. Die verschachtelte Signatur des Datenstroms mittels des ersten und zweiten Zeitstempels ermöglicht es, den benötigten Speicherbedarf gering zu halten, da wenige Repräsentationswerte jeweils mit einem fortgeschrittenen Zeitstempel versehen und abgespeichert werden. Hierdurch können beispielsweise Hashbäume, mit denen beispielsweise Repräsentationswerte erzeugt werden, klein bleiben.

In einer anderen bevorzugten Weiterbildung der Erfindung werden der erste Zeitstempel jeweils als fortgeschrittener Zeitstempel und der zweite Zeitstempel jeweils als qualifizierter Zeitstempel bereitgestellt. Mit dieser Weiterbildung wird der Datenstrom sehr wirkungsvoll gegen eine Manipulation gesichert. Fortgeschrittene Zeitstempel werden Datenrepräsentationswerten zugeordnet, die auch sehr wenige oder gar nur einen Datensatz umfassen können. Hierdurch werden relativ kleine Einheiten des Datenstroms zuverlässig gesichert. Zu einem oder mehreren Datenrepräsentationswerte wird jeweils ein Intervallrepräsentationswert erzeugt, dem ein qualifizierter Zeitstempel zugeordnet wird. Hierdurch ist eine nachträgliche Bearbeitung des Datenstroms ausgeschlossen, so dass das gesicherte Datenobjekt, welches den Datenstrom umfasst, als zuverlässiges und rechtssicheres Beweismittel herangezogen werden kann.

Es kann vorgesehen sein, dass die Datensätze des Datenstroms eine einheitliche Größe aufweisen. Alternativ können die Datensätze auch verschiedene Größen aufweisen. Die Datensätze können beispielsweise als einfache Dateien oder als Containerdateien bereitgestellt werden, die miteinander verkettet sind, um den Datenstrom zu bilden. Eine Containerdatei ist in der digitalen Datenverarbeitung eine Datei, die ihrerseits wiederum unterschiedliche Dateien und Dateitypen enthalten kann. Die Containerdateien eines Datenstroms können wiederum gleiche oder unterschiedliche Größen aufweisen.

Den Datensätzen, welche von jeweils einem Intervall mit einer ersten Intervalllänge umfasst werden, wird ein Datenrepräsentationswert zugeordnet. Als Datenrepräsentationswert kann beispielsweise eine Prüfsumme für die Anzahl der Datensätze in dem Intervall gebildet werden. Alternativ oder ergänzend kann vorgesehen sein, dass den Datensätzen nach bekannten Verfahren jeweils Hashwerte zugeordnet werden, die in einem Hashbaum angeordnet werden. Die Spitze des Hashbaums entspricht dann dem Datenrepräsentationswert der Datensätze. Somit werden die mehreren Datensätze in dem Intervall auf einen einzigen Datenrepräsentationswert abgebildet.

Den Datenrepräsentationswerten, welche von jeweils einem Intervall mit einer zweiten Intervalllänge umfasst werden, wird ein Intervallrepräsentationswert zugeordnet. Als Intervallrepräsentationswert kann beispielsweise die Korrekturprüfsumme der Datenrepräsentationswerte in dem Intervall gebildet werden. Alternativ oder ergänzend können den Datenrepräsentationswerten beispielsweise jeweils Hashwerte zugeordnet werden, die in einem Hashbaum angeordnet werden. Die Spitze des Hashbaums entspricht dem Intervallrepräsentationswert der Datenrepräsentationswerte. Somit werden die mehreren Datenrepräsentationswerte in dem Intervall zweiter Intervalllänge auf einen einzigen Intervallrepräsentationswert abgebildet.

Die Intervalllänge des ersten Intervalls und / oder des zweiten Intervalls kann auf verschiedene Weise bestimmt werden, was nachfolgend noch beispielhaft erläutert wird.

Alternativ zur Anwendung im klinischen Umfeld kann das erfindungsgemäße Verfahren für andere Anwendungen eingesetzt werden. Eine beispielhafte Anwendung ist die Überwachung bzw. die Nachvollziehbarkeit der Tätigkeit in hochsensiblen Sicherheitsbereichen, wie militärischen Einrichtungen, der Flugsicherung, der Betreibung von Kraftwerken, der Versorgungsnetze (Strom, Gas, Wasser, Öl), der chemischen, pharmazeutischen und biotechnischen Industrie, im Besonderen in der rechtssicheren Video-Überwachung. Weiterhin kann das Verfahren in Sicherheitsbereichen beim Objekt- und Personenschutz in Tunneln, Bahnanlagen, Bahnhöfen, Flughäfen und Gebäuden/Einrichtungen aller Art eingesetzt werden. Ferner können mittels des Verfahrens im Bereich der kriminalpolizeilichen Tätigkeit gerichtsfest verwertbare audiovisuelle Wiedergaben von Beschuldigten- und Zeugenvernehmungen sowie weitere Beweise dokumentiert und archiviert werden. Eine weitere beispielhafte Anwendung liegt ferner im Bereich des Versicherungs-, Bank- und Aktienrechts bei der Realisierung der Pflichtberatung der Verbraucher. Das Verfahren kann beispielsweise Verwendung in Video-Anwendungen auf Smartphones, Tablets, Notebooks und embedded Plattformen zur rechtssicheren Dokumentation von Vorgängen und Prozessen finden. Die Vorgänge und Prozesse umfassen beispielsweise Baumängelfeststellungen durch Sachverständige, automatische Dokumentation von Unfallhergängen, Schadensaufnahmen, Nachweisführungen sowie die Qualitätssicherung selbiger.

Eine bevorzugte Weiterbildung der Erfindung sieht vor, dass die die erste Intervalllänge und / oder zweite Intervalllänge durch eine vorgegebene Anzahl von Datensätzen in dem Datenstrom bestimmt werden. Hierbei wird mittels eines einfachen Abzählens der Datensätze die Intervalllänge festgelegt. Beispielsweise kann mittels eines Polling-Verfahrens das Ende des ersten bzw. zweiten Intervalls bestimmt werden, woraufhin der entsprechende Repräsentationswert erzeugt wird. Hierbei ist es unerheblich, ob die Datensätze gleich oder verschieden groß sind. Es kann beispielsweise vorgesehen sein, dass die erste Intervalllänge jeweils vier Datensätze und die zweite Intervalllänge jeweils zwölf Datensätze betragen.

Bei einer zweckmäßigen Ausgestaltung der Erfindung kann vorgesehen sein, dass die erste Intervalllänge und / oder zweite Intervalllänge durch ein vorgegebenes Zeitintervall bestimmt werden. Die Vorgabe eines Zeitintervalls ist insbesondere vorteilhaft, wenn die Datensätze des Datenstroms eine einheitliche Größe aufweisen.

Eine vorteilhafte Ausführungsform der Erfindung sieht vor, dass die zweite Intervalllänge ein ganzzahliges Vielfaches der ersten Intervalllänge ist.

Bevorzugt sieht eine Fortbildung der Erfindung vor, dass ein Zeitintervall vorgegeben wird, am Ende des Zeitintervalls geprüft wird, ob ein aktueller Datensatz, der zum Ende des Zeitintervalls von der Datenverarbeitungseinrichtung empfangen wird, vollständig empfangen wurde und abhängig vom Ergebnis der Prüfung die erste Intervalllänge und / oder die zweite Intervalllänge nach folgenden Kriterien bestimmt werden:
a) die erste Intervalllänge und / oder die zweite Intervalllänge werden durch das vorgegebene Zeitintervall bestimmt, wenn der aktuelle Datensatz zum Ende des Zeitintervalls vollständig empfangen wurde oder
b) die erste Intervalllänge und / oder die zweite Intervalllänge werden durch einen Zeitpunkt nach dem Ende des vorgegebenen Zeitintervalls bestimmt, an dem der aktuelle Datensatz vollständig empfangen wurde.

Hierdurch ist sichergestellt, dass ein Intervall immer vollständige Datensätze umfasst, auch wenn ein Zeittakt zur Erzeugung des Zeitstempels vorgegeben ist. Die Größe der Intervalle ist hierbei unter Umständen nicht konstant. Das vorgegebene Zeitintervall kann beispielsweise 5 s lang sein. Wenn beim Ablauf der 5 s der aktuelle Datensatz vollständig empfangen wurde, wird das Intervall beendet und der entsprechende Repräsentationswert erzeugt. Dieser Fall ist jedoch eher unwahrscheinlich. Wahrscheinlicher ist, dass beim Ablauf der 5 s der aktuelle Datensatz noch nicht vollständig empfangen wurde. In diesem Fall wird abgewartet bis der aktuelle Datensatz vollständig empfangen wurde. Erst dann wird das Intervall beendet und der entsprechende Repräsentationswert erzeugt. Das Intervall kann hierbei beispielsweise eine Länge von 5,7 s haben. Nach Ablauf weiterer 5 s wird wiederum geprüft, ob der dann aktuelle Datensatz vollständig empfangen wurde. Falls das nicht der Fall sein sollte, wird bis zum vollständigen Empfang abgewartet, bevor das Intervall beendet wird. Das Intervall kann dann beispielsweise eine Länge von 5,3 s haben. Sowohl das erste Zeitintervall als auch das zweite Zeitintervall können hiermit bestimmt werden.

Bei einer vorteilhaften Ausgestaltung der Erfindung kann vorgesehen sein, dass beim Empfangen des ersten Datensatzes des Datenstroms in der Datenverarbeitungseinrichtung ein Zeitstempel empfangen wird, der dem ersten Datensatz zugeordnet wird, und der erste Datensatz zusammen mit dem zugeordneten Zeitstempel abgespeichert wird. Hierdurch wird der Beginn des Datenstroms gesichert festgehalten. Der Zeitstempel kann als fortgeschrittener oder qualifizierter Zeitstempel empfangen werden.

Eine vorteilhafte Weiterbildung der Erfindung sieht vor, dass beim Empfangen des letzten Datensatzes des Datenstroms in der Datenverarbeitungseinrichtung ein Zeitstempel empfangen wird, der dem letzten Datensatz zugeordnet wird, und der letzte Datensatz zusammen mit dem zugeordneten Zeitstempel abgespeichert wird. Das Ende des Datenstroms wird hiermit gesichert festgehalten. Der Zeitstempel kann als fortgeschrittener oder qualifizierter Zeitstempel empfangen werden.

Bei einer zweckmäßigen Weiterbildung der Erfindung kann vorgesehen sein, dass der Datenstrom als Videodatenstrom bereitgestellt wird, der eine kontinuierliche Abfolge von Bilddatensätzen umfasst. Die Bilddatensätze können beispielsweise als einzelne Bilder, als Bildcontainerdateien oder als eine Kombination hiervon bereitgestellt werden. Es kann vorgesehen sein, dass der Videodatenstrom wenigstens ein digitales Wasserzeichen aufweist. Das wenigstens eine Wasserzeichen kann beispielsweise als robustes digitales Wasserzeichen und / oder als fragiles digitales Wasserzeichen gebildet sein. Der Videodatenstrom kann ein einzelnes Videosignal, mehrere Videosignale, ein einzelnes und / oder mehrere dreidimensionale Videosignale sowie eine Kombination hiervon umfassen. Es kann vorgesehen sein, die Bilddatensätze mittels einer variablen Längendekodierung zu erzeugen. Der Videodatenstrom kann beispielsweise als Video bereitgestellt werden, das gemäß einem Komprimierungsverfahren nach dem bekannten H.264 Standard erzeugt wurde. Das H.264 erzeugt Videos, die neben P- und B-Frames sogenannte I-Frames und IDR-Frames (*IDR - instantaneous decoding refresh*) umfassen, die nur nicht komprimierte Bilddaten enthalten. Aus den I/IDR-Frames können Repräsentationswerte erzeugt werden. Die Häufigkeit der IDR-Frames, also der zeitliche Abstand zwischen zwei IDR-Frames, können von einem Benutzer vorgegeben werden. Der Abstand der IDR-Frames kann beispielsweise mit der ersten oder zweiten Intervalllänge übereinstimmen. Zwischen zwei aufeinander folgenden IDR-Frames ist ein artefaktfreier Schnitt des Videos nicht möglich, was zusätzliche Fälschungssicherheit ermöglicht. Ein IDR-Frame bestimmt den Beginn bzw. das Ende einer Containerdatei. Alternativ kann vorgesehen sein, dass der Videodatenstrom als Video gemäß dem bekannten MPEG-4 ASP Standard bereitgestellt wird. Gemäß dem MPEG-4 ASP Standard sind I-Frames und P-Frames vorgesehen, wobei die P-Frames miteinander verkettet sind. Aus den I-Frames, die nur nicht komprimierte Bilddaten enthalten, können Repräsentationswerte erzeugt werden. Zwischen zwei aufeinander folgenden I-Frames ist ein artefaktfreier Schnitt des Videos nicht möglich, was zusätzliche Fälschungssicherheit ermöglicht. Ein I-Frame bestimmt den Beginn bzw. das Ende einer Containerdatei.

Bei einer zweckmäßigen Fortbildung der Erfindung kann vorgesehen sein, dass das Datenobjekt zusätzlich zu dem Datenstrom einen Audiodatenstrom umfasst, der eine kontinuierliche Abfolge einzelner Audiodatensätze umfasst, wobei der Audiodatenstrom von der Datenverarbeitungsanlage empfangen wird, und das Verfahren die weiteren folgenden Schritte umfasst:
- Erzeugen von einem Audiodatenrepräsentationswert jeweils am Ende eines Intervalls mit einer dritten Intervalllänge, welcher den Audiodatensätzen des jeweiligen Intervalls dritter Länge zugeordnet wird,
- Empfangen eines dem jeweiligen Audiodatenrepräsentationswert zugeordneten dritten Zeitstempels,
- Speichern des jeweiligen Audiodatenrepräsentationswertes zusammen mit dem zugeordneten dritten Zeitstempel,
- Erzeugen von einem Audiointervallrepräsentationswert jeweils am Ende eines Intervalls mit einer vierten Intervalllänge, die größer ist als die dritte Intervalllänge, der den Audiodatenrepräsentationswerten des jeweiligen Intervalls vierter Länge zugeordnet wird,
- Empfangen eines dem jeweiligen Audiointervallrepräsentationswert zugeordneten vierten Zeitstempels, und
- Speichern des jeweiligen Audiointervallrepräsentationswertes zusammen mit dem zugeordneten vierten Zeitstempel.

Die obigen Ausführungen zum Erstellen der Zeitstempel, dem Erzeugen der Repräsentationswerte, der Größe der Datensätze und dem Bestimmen der Intervalllängen gelten für diese Ausführungsform analog. Es kann vorgesehen sein, dass der dritte Zeitstempel jeweils als fortgeschrittener oder qualifizierter Zeitstempel bereitgestellt wird. Des Weiteren kann vorgesehen sein, dass der vierte Zeitstempel jeweils als fortgeschrittener oder qualifizierter Zeitstempel bereitgestellt wird. Der Audiodatenstrom kann ein Mono-, ein Stereo- oder ein Mehrkanal-Signal umfassen.

Eine Fortbildung der Erfindung sieht vor, dass die erste Intervalllänge gleich der dritten Intervalllänge ist und / oder die zweite Intervalllänge gleich der vierten Intervalllänge ist. Hierdurch entsprechen die jeweils ersten Zeitstempel den jeweils dritten Zeitstempeln und / oder die jeweils zweiten Zeitstempel den jeweils vierten Zeitstempeln.

Eine vorteilhafte Weiterbildung sieht vor, dass das Datenobjekt zusätzlich zu dem Datenstrom einen Objektdatenstrom umfasst, der mittels eines Geräts erzeugt wird, das einen Parameter eines Objekts überwacht, und der eine kontinuierliche Abfolge einzelner Objektdatensätze umfasst, wobei der Objektdatenstrom von der Datenverarbeitungsanlage empfangen wird, und das Verfahren die weiteren folgenden Schritte umfasst:
- Erzeugen von einem Objektdatenrepräsentationswert jeweils am Ende eines Intervalls mit einer fünften Intervalllänge, welcher den Objektdatensätzen des jeweiligen Intervalls fünfter Länge zugeordnet wird,
- Empfangen eines dem jeweiligen Objektdatenrepräsentationswert zugeordneten fünften Zeitstempels,
- Speichern des jeweiligen Objektdatenrepräsentationswertes zusammen mit dem zugeordneten fünften Zeitstempel,
- Erzeugen von einem Objektintervallrepräsentationswert jeweils am Ende eines Intervalls mit einer sechsten Intervalllänge, die größer ist als die fünfte Intervalllänge, der den Objektdatenrepräsentationswerten des jeweiligen Intervalls sechster Länge zugeordnet wird,
- Empfangen eines dem jeweiligen Objektintervallrepräsentationswert zugeordneten sechsten Zeitstempels, und
- Speichern des jeweiligen Objektintervallrepräsentationswertes zusammen mit dem zugeordneten sechsten Zeitstempel.

Die obigen Ausführungen zum Erstellen der Zeitstempel, dem Erzeugen der Repräsentationswerte, der Größe der Datensätze und dem Bestimmen der Intervalllängen gelten für diese Ausführungsform analog. Es kann vorgesehen sein, dass der fünfte Zeitstempel jeweils als fortgeschrittener oder qualifizierter Zeitstempel bereitgestellt wird. Des Weiteren kann vorgesehen sein, dass der sechste Zeitstempel jeweils als fortgeschrittener oder qualifizierter Zeitstempel bereitgestellt wird. Es kann vorgesehen sein, mittels des Geräts mehrere Parameter des Objekts zu überwachen und die mehreren Parameter für den Objektdatenstrom bereitzustellen. Ergänzend oder alternativ kann vorgesehen sein, mittels einem oder mehrerer Geräte einen oder mehrere Parameter von mehreren Objekten zu überwachen und die ermittelten Daten für den Objektdatenstrom bereitzustellen.

Eine Weiterbildung der Erfindung kann vorsehen, dass die fünfte Intervalllänge einer Taktrate des Geräts entspricht, mit dem der Parameter des Objekts aktualisiert wird. Es kann vorgesehen sein, dass der Wert des Parameters des Objekts in bestimmten zeitlichen Abständen mittels des Gerätes aktualisiert wird. Die zeitlichen Abstände können regelmäßig oder unregelmäßig verteilt sein. Die fünfte Intervalllänge kann dem Überwachungsrhythmus angepasst werden, um einen Zeitstempel für jeden aktualisierten Parameterwert zu empfangen.

Bei einer bevorzugten Ausführungsform kann vorgesehen sein, dass der Objektdatenstrom von einem medizinischen Gerät bereitgestellt wird, das einen Zustand eines Patienten überwacht, und der Objektdatenstrom wenigstens einen Wert aus der folgenden Gruppe von Werten des Patienten umfasst: Herzfrequenz, Blutdruck, Atemfrequenz und Hirnströme. Alternativ kann beispielsweise vorgesehen, dass der Objektdatenstrom von einem Gerät bereitgestellt wird, dass die Temperatur eines Objekts ermittelt und überwacht. Weiterhin kann alternativ vorgesehen sein, mittels des Geräts einen Bewegungszustand des Objekts zu überwachen, beispielsweise die Position und / oder die Geschwindigkeit und / oder die Beschleunigung. Nach einer weiteren Alternative kann beispielsweise vorgesehen sein, den Verlauf einer chemischen Reaktion mittels des Geräts zu überwachen und Reaktionsparameter zu bestimmen.

Gemäß einer weiteren vorteilhaften Weiterbildung ist vorgesehen, dass das Datenobjekt nach dem vollständigen Empfang des Datenstroms verschlüsselt wird. Die Verschlüsselung verhindert einen Zugriff nicht autorisierter Personen auf das Datenobjekt und bietet einen zusätzlichen Schutz gegen Manipulationen.

### Beschreibung bevorzugter Ausführungsbeispiele

Die Erfindung wird im Folgenden anhand von Ausführungsbeispielen unter Bezugnahme auf Figuren einer Zeichnung näher erläutert. Hierbei zeigen:
Fig.1 eine schematische Darstellung eines Datenstroms und
Fig. 2 eine schematische Darstellung eines Systems.

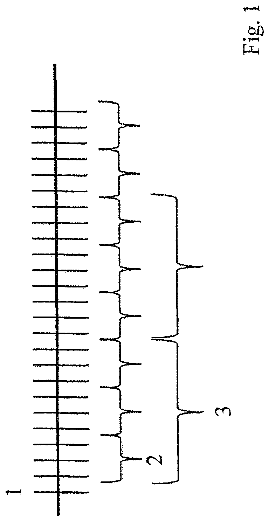

Fig. 1 zeigt eine schematische Darstellung eines Datenstroms, der eine kontinuierliche Abfolge von Datensätzen 1 umfasst. Am Ende eines Intervalls 2 mit einer ersten Intervalllänge wird ein Datenrepräsentationswert erzeugt, der den Datensätzen des Intervalls zugeordnet ist. Hierzu kann beispielsweise die Prüfsumme der Datensätze in dem Intervall gebildet werden. Im gezeigten Beispiel um jedes Intervall 2 jeweils drei Datensätze. Es kann vorgesehen sein, dass die Intervalle eine unterschiedliche Anzahl von Datensätzen umfassen. Es wird ein fortgeschrittener Zeitstempel empfangen, der dem jeweiligen Datenrepräsentationswert zugeordnet wird. Der jeweilige Datenrepräsentationswert wird zusammen mit dem zugeordneten fortgeschrittenen Zeitstempel abgespeichert, beispielsweise auf einem Speichermedium.

Ein Intervall 3 mit einer zweiten Intervalllänge umfasst im dargestellten Beispiel jeweils drei Intervalle erster Länge. Auch hier kann vorgesehen sein, dass die Intervalle zweiter Länge eine unterschiedliche Anzahl von Intervallen erster Länge umfassen. Am Ende des Intervalls 3 wird ein Intervallrepräsentationswert erzeugt, der den Datenrepräsentationswerten des Intervalls 3 zugeordnet wird. Ein dem Intervallrepräsentationswert zugeordneter qualifizierter Zeitstempel wird empfangen und zusammen mit dem Intervallrepräsentationswert abgespeichert.

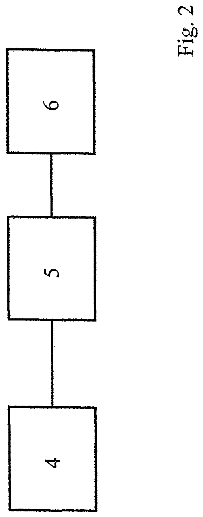

Fig. 2 zeigt eine schematische Darstellung eines Systems. Eine Videoaufnahmeeinrichtung 4 ist mit einer Datenverarbeitungseinrichtung 5 verbunden. Die Datenverarbeitungseinrichtung 5 ist mit einer Datenspeichereinrichtung 6 verbunden. Die Videoaufnahmeeinrichtung 4 kann beispielsweise eine Digitalkamera sein, welche bevorzugt zwei Ausgänge aufweist. Über einen ersten Ausgang wird das Videosignal auf eine Anzeigeeinrichtung im Operationsraum übertragen. Über einen zweiten Ausgang wird das Videosignal zur Datenverarbeitungseinrichtung 5 übertragen, beispielsweise einem Desktop-PC oder einem Laptop. Auf der Datenverarbeitungseinrichtung wird das Verfahren zum digitalen Signieren des Videodatenstroms ausgeführt. Das digital signierte Datenobjekt wird anschließend in der Datenspeichereinrichtung 6 abgespeichert. Optional kann es zuvor noch verschlüsselt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum Erzeugen eines gesicherten Datenobjekts mittels einer Datenverarbeitungseinrichtung, wobei ein digitaler Datenstrom, der eine kontinuierliche Abfolge von Datensätzen (1) umfasst, von der Datenverarbeitungsanlage (5) empfangen wird, und währenddessen die folgenden Schritte ausgeführt werden:
- Erzeugen von einem Datenrepräsentationswert jeweils am Ende eines Intervalls (2) mit einer ersten Intervalllänge, welcher den Datensätzen des jeweiligen Intervalls (2) erster Länge zugeordnet wird,
- Empfangen eines dem jeweiligen Datenrepräsentationswert zugeordneten ersten Zeitstempels, und
- Speichern des jeweiligen Datenrepräsentationswertes zusammen mit dem zugeordneten ersten Zeitstempel,
wobei parallel die folgenden Schritte ausgeführt werden:
- Erzeugen von einem Intervallrepräsentationswert jeweils am Ende eines Intervalls (3) mit einer zweiten Intervalllänge, die größer ist als die erste Intervalllänge, der den Datenrepräsentationswerten des jeweiligen Intervalls (3) zweiter Länge zugeordnet wird,
- Empfangen eines dem jeweiligen Intervallrepräsentationswert zugeordneten zweiten Zeitstempels, und
- Speichern des jeweiligen Intervallrepräsentationswertes zusammen mit dem zugeordneten zweiten Zeitstempel.

2. Verfahren nach Anspruch 1, wobei die erste Intervalllänge und / oder zweite Intervalllänge durch eine vorgegebene Anzahl von Datensätzen in dem Datenstrom bestimmt werden.

3. Verfahren nach Anspruch 1, wobei die erste Intervaillänge und / oder zweite Intervalllänge durch ein vorgegebenes Zeitintervall bestimmt werden.

4. Verfahren nach mindestens einem der vorangehenden Ansprüche, wobei die zweite Intervalllänge ein ganzzahliges Vielfaches der ersten Intervalllänge ist.

5. Verfahren nach Anspruch 1, wobei ein Zeitintervall vorgegeben wird, am Ende des Zeitintervalls geprüft wird, ob ein aktueller Datensatz, der zum Ende des Zeitintervalls von der Datenverarbeitungseinrichtung empfangen wird, vollständig empfangen wurde und abhängig vom Ergebnis der Prüfung die erste Intervalllänge und / oder die zweite Intervalllänge nach folgenden Kriterien bestimmt werden:
a) die erste Intervalllänge und / oder die zweite Intervalllänge werden durch das vorgegebene Zeitintervall bestimmt, wenn der aktuelle Datensatz zum Ende des Zeitintervalls vollständig empfangen wurde oder
b) die erste Intervalllänge und / oder die zweite Intervalllänge werden durch einen Zeitpunkt nach dem Ende des vorgegebenen Zeitintervalls bestimmt, an dem der aktuelle Datensatz vollständig empfangen wurde.

6. Verfahren nach mindestens einem der vorangehenden Ansprüche, wobei beim Empfangen des ersten Datensatzes des Datenstroms in der Datenverarbeitungseinrichtung (5) ein Zeitstempel empfangen wird, der dem ersten Datensatz zugeordnet wird, und der erste Datensatz zusammen mit dem zugeordneten Zeitstempel abgespeichert wird.

7. Verfahren nach mindestens einem der vorangehenden Ansprüche, wobei beim Empfangen des letzten Datensatzes des Datenstroms in der Datenverarbeitungseinrichtung (5) ein Zeitstempel empfangen wird, der dem letzten Datensatz zugeordnet wird, und der letzte Datensatz zusammen mit dem zugeordneten Zeitstempel abgespeichert wird.

8. Verfahren nach mindestens einem der vorangehenden Ansprüche, wobei der Datenstrom als Videodatenstrom bereitgestellt wird, der eine kontinuierliche Abfolge von Bilddatensätzen umfasst.

9. Verfahren nach mindestens einem der vorangehenden Ansprüche, wobei das Datenobjekt zusätzlich zu dem Datenstrom einen Audiodatenstrom umfasst, der eine kontinuierliche Abfolge einzelner Audiodatensätze umfasst, wobei der Audiodatenstrom von der Datenverarbeitungsanlage (5) empfangen wird, und das Verfahren die weiteren folgenden Schritte umfasst:
- Erzeugen von einem Audiodatenrepräsentationswert jeweils am Ende eines Intervalls mit einer dritten Intervalllänge, welcher den Audiodatensätzen des jeweiligen Intervalls dritter Länge zugeordnet wird,
- Empfangen eines dem jeweiligen Audiodatenrepräsentationswert zugeordneten dritten Zeitstempels,
- Speichern des jeweiligen Audiodatenrepräsentationswertes zusammen mit dem zugeordneten dritten Zeitstempel,
- Erzeugen von einem Audiointervallrepräsentationswert jeweils am Ende eines Intervalls mit einer vierten Intervalllänge, die größer ist als die dritte Intervalllänge, der den Audiodatenrepräsentationswerten des jeweiligen Intervalls vierter Länge zugeordnet wird,
- Empfangen eines dem jeweiligen Audiointervallrepräsentationswert zugeordneten vierten Zeitstempels, und
- Speichern des jeweiligen Audiointervallrepräsentationswertes zusammen mit dem zugeordneten vierten Zeitstempel.

10. Verfahren nach Anspruch 9, wobei die erste Intervalllänge gleich der dritten Intervalllänge ist und / oder die zweite Intervalllänge gleich der vierten Intervalllänge ist.

11. Verfahren nach mindestens einem der vorangehenden Ansprüche, wobei das Datenobjekt zusätzlich zu dem Datenstrom einen Objektdatenstrom umfasst, der mittels eines Geräts erzeugt wird, das einen Parameter eines Objekts überwacht, und der eine kontinuierliche Abfolge einzelner Objektdatensätze umfasst, wobei der Objektdatenstrom von der Datenverarbeitungsanlage (5) empfangen wird, und das Verfahren die weiteren folgenden Schritte umfasst:
- Erzeugen von einem Objektdatenrepräsentationswert jeweils am Ende eines Intervalls mit einer fünften Intervalllänge, welcher den Objektdatensätzen des jeweiligen Intervalls fünfter Länge zugeordnet wird,
- Empfangen eines dem jeweiligen Objektdatenrepräsentationswelt zugeordneten fünften Zeitstempels,
- Speichern des jeweiligen Objektdatenrepräsentationswertes zusammen mit dem zugeordneten fünften Zeitstempel,
- Erzeugen von einem Objektintervallrepräsentationswert jeweils am Ende eines Intervalls mit einer sechsten Intervalllänge, die größer ist als die fünfte Intervalllänge, der den Objektdatenrepräsentationswerten des jeweiligen Intervalls sechster Länge zugeordnet wird,
- Empfangen eines dem jeweiligen Objektintervallrepräsentationswert zugeordneten sechsten Zeitstempels, und
- Speichern des jeweiligen Objektintervallrepräsentationswertes zusammen mit dem zugeordneten sechsten Zeitstempel.

12. Verfahren nach Anspruch 11, wobei die fünfte Intervalllänge einer Taktrate des Geräts entspricht, mit dem der Parameter des Objekts aktualisiert wird.

13. Verfahren nach Anspruch 11 oder 12, wobei der Objektdatenstrom von einem medizinischen Gerät bereitgestellt wird, das einen Zustand eines Patienten überwacht, und der Objektdatenstrom wenigstens einen Wert aus der folgenden Gruppe von Werten des Patienten umfasst: Herzfrequenz, Blutdruck, Atemfrequenz und Hirnströme.

14. Verfahren nach mindestens einem der vorangehenden Ansprüche, wobei das Datenobjekt nach dem vollständigen Empfang des Datenstroms verschlüsselt wird.

15. System umfassend eine Videoaufnahmeeinrichtung (4), eine Datenverarbeitungseinrichtung (5) und eine Datenspeichereinrichtung (6), wobei die Videoaufnahmeeinrichtung (4) konfiguriert ist, einen Datenstrom an die Datenverarbeitungseinrichtung (5) zu übertragen und die Datenverarbeitungseinrichtung (5) konfiguriert ist, den Datenstrom mittels eines Verfahrens gemäß wenigstens einem der vorangehenden Ansprüche zu bearbeiten und anschließend in der Datenspeichereinrichtung (6) als gesichertes Datenobjekt abzuspeichern.

## Claims

1. Method for generating a secured data object using a data processing device, wherein a digital data stream comprising a continuous sequence of data records (1) is received from the data processing system (5), while the following steps are performed:
- generating a data representation value at the end of each interval (2) with a first interval length, which is assigned to the data records of the respective interval (2) of first length,
- receiving a first time stamp assigned to the respective data representation value, and
- storing the respective data representation value together with the assigned first time stamp,
wherein the following steps are performed in parallel:
- generating an interval representation value at the end of each interval (3) with a second interval length which is greater than the first interval length, said value being assigned to the data representation values of the respective interval (3) of second length,
- receiving a second time stamp assigned to the respective interval representation value, and
- storing the respective interval representation value together with the assigned second time stamp.

2. Method according to Claim 1, wherein the first interval length and / or second interval length are determined by a predetermined number of data records in the data stream.

3. Method according to Claim 1, wherein the first interval length and / or second interval length are determined by a predetermined time interval.

4. Method according to at least one of the preceding claims, wherein the second interval length is an integer multiple of the first interval length.

5. Method according to Claim 1, wherein a time interval is predetermined, at the end of the time interval a check is made as to whether a current data record received by the data processing device at the end of the time interval has been fully received and, depending on the result of the check, the first interval length and / or the second interval length are determined according to the following criteria:
a) the first interval length and / or the second interval length are determined by the predetermined time interval if the current data record was fully received at the end of the time interval or
b) the first interval length and / or the second interval length are determined by a time after the end of the predetermined time interval at which the current data set was fully received.

6. Method according to at least one of the preceding claims, wherein, when the first data record of the data stream is received in the data processing device (5), a time stamp is received which is assigned to the first data record, and the first data set is stored together with the assigned time stamp.

7. Method according to at least one of the preceding claims, wherein, when the last data record of the data stream is received in the data processing device (5), a time stamp is received which is assigned to the last data record, and the last data record is stored together with the assigned time stamp.

8. Method according to at least one of the preceding claims, wherein the data stream is provided as a video data stream that comprises a continuous sequence of image data records.

9. Method according to at least one of the preceding claims, wherein in addition to the data stream, the data object comprises an audio data stream comprising a continuous sequence of individual audio data records, wherein the audio data stream is received from the data processing system (5), and the method comprises the following additional steps:
- generating an audio data representation value at the end of each interval with a third interval length, which is assigned to the audio data records of the respective interval of third length,
- receiving a third time stamp assigned to the respective audio data representation value, and
- storing the respective audio data representation value together with the assigned third time stamp,
- generating an audio interval representation value at the end of each interval with a fourth interval length which is greater than the third interval length, said value being assigned to the audio data representation values of the respective interval of fourth length,
- receiving a fourth time stamp assigned to the respective audio interval representation value, and
- storing the respective audio interval representation value together with the assigned fourth time stamp.

10. Method according to Claim 9, wherein the first interval length is equal to the third interval length and / or the second interval length is equal to the fourth interval length.

11. Method according to at least one of the preceding claims, wherein in addition to the data stream, the data object comprises an object data stream, which is generated using a device that monitors a parameter of an object and comprises a continuous sequence of individual object data records, wherein the object data stream is received from the data processing system (5), and the method comprises the following additional steps:
- generating an object data representation value at the end of each interval with a fifth interval length, which is assigned to the object data records of the respective interval of fifth length,
- receiving a fifth time stamp assigned to the respective object data representation value,
- storing the respective object data representation value together with the assigned fifth time stamp,
- generating an object interval representation value at the end of each interval with a sixth interval length which is greater than the fifth interval length, said value being assigned to the object data representation values of the respective interval of sixth length,
- receiving a sixth time stamp assigned to the respective object interval representation value, and
- storing the respective object interval representation value together with the assigned sixth time stamp.

12. Method according to Claim 11, wherein the fifth interval length corresponds to a clock rate of the device, at which the parameter of the object is updated.

13. Method according to Claim 11 or 12, wherein the object data stream is provided by a medical device that monitors a condition of a patient, and the object data stream comprises at least one value from the following group of values of the patient: heart rate, blood pressure, respiratory rate and brain waves.

14. Method according to at least one of the preceding claims, wherein the data object is encrypted after the data stream has been fully received.

15. System comprising a video recording device (4), a data processing device (5) and a data storage device (6), wherein the video recording device (4) is configured to transmit a data stream to the data processing device (5) and the data processing device (5) is configured to process the data stream by means of a method according to at least one of the preceding claims and then store it in the data storage device (6) as a secured data object.

## Revendications

1. Procédé de génération d'un objet de données sécurisé au moyen d'un dispositif de traitement de données, dans lequel un flux de données numériques comprend une séquence continue d'enregistrements de données (1), qui sont reçus par le système de traitement de données (5), au cours de laquelle les étapes suivantes sont effectuées:
- génération d'une valeur de représentation de données à la fin d'un intervalle (2) avec une première longueur d'intervalle, qui est affectée aux enregistrements de données de l'intervalle respectif (2) de la première longueur,
- réception d'un premier pointeur temporel affecté à la valeur de représentation de données respective, et
- mémorisation de la valeur de représentation des données respective avec le premier pointeur temporel affecté,
dans lequel les étapes suivantes sont effectuées en parallèle:
- génération d'une valeur de représentation d'intervalle dans chaque cas à la fin d'un intervalle (3) avec une deuxième longueur d'intervalle qui est supérieure à la première longueur d'intervalle, qui est affectée aux valeurs de représentation de données de l'intervalle respectif (3) de la deuxième longueur,
- réception d'un deuxième pointeur temporel affecté à la valeur de représentation d'intervalle respective, et
- mémorisation de la valeur de représentation d'intervalle respective avec le deuxième pointeur temporel affecté.

2. Procédé selon la revendication 1, dans lequel la première longueur d'intervalle et/ou la deuxième longueur d'intervalle sont déterminés par un nombre prédéterminé d'enregistrements de données dans le flux de données.

3. Procédé selon la revendication 1, dans lequel la première longueur d'intervalle et/ou la deuxième longueur d'intervalle sont déterminées par un intervalle de temps prédéterminé.

4. Procédé selon au moins une des revendications précédentes, dans lequel la deuxième longueur d'intervalle est un multiple entier de la première longueur d'intervalle.

5. Procédé selon la revendication 1, dans lequel un intervalle de temps est spécifié, à la fin de l'intervalle de temps on vérifie si un ensemble de données actuel, qui est reçu par le dispositif de traitement de données à la fin de l'intervalle de temps, a été complètement reçu et, selon le résultat du test, la longueur du premier intervalle et/ou la deuxième longueur d'intervalle peut être déterminée selon les critères suivants:
a) la première longueur d'intervalle et/ou la deuxième longueur d'intervalle sont déterminées par l'intervalle de temps donné si l'enregistrement de données actuel a été reçu en entier à la fin de l'intervalle de temps ou
b) la première longueur d'intervalle et/ou la deuxième longueur d'intervalle sont déterminées par un point dans le temps après la fin de l'intervalle de temps prédéterminé auquel l'enregistrement de données courant a été complètement reçu.

6. Procédé selon au moins une des revendications précédentes, dans lequel lors de la réception du premier ensemble de données du flux de données dans le dispositif de traitement de données (5) un pointeur temporel est reçu, qui est affecté au premier enregistrement de données, et le premier enregistrement de données est mémorisé avec le pointeur temporel affecté.

7. Procédé selon au moins une des revendications précédentes, dans lequel lors de la réception du dernier enregistrement de données du flux de données dans le dispositif de traitement de données (5) un pointeur temporel est reçu qui est affecté au dernier enregistrement de données, et le dernier enregistrement de données est stocké avec le pointeur temporel affecté.

8. Procédé selon au moins une des revendications précédentes, dans lequel le flux est fourni sous forme de flux de données vidéo, qui est une séquence continue d'ensembles de données d'image.

9. Procédé selon au moins une des revendications précédentes, dans lequel l'objet de données comprend, en plus du flux de données, un flux de données audio qui comprend une séquence continue d'ensembles de données audio individuels, dans lequel le flux de données audio est reçu par le système de traitement de données (5) et le procédé comprend les étapes supplémentaires suivantes:
- génération d'une valeur de représentation de données audio à la fin d'un intervalle avec une troisième longueur d'intervalle, qui correspond aux enregistrements de données audio de l'intervalle respectif de troisième longueur,
- réception d'un troisième pointeur temporel affecté à la valeur de représentation de données audio respective,
- mémorisation de la valeur de représentation des données audio respectives avec le troisième pointeur temporel affecté,
- génération d'une valeur de représentation d'intervalle audio à la fin d'un intervalle avec une quatrième longueur d'intervalle qui est supérieure à la troisième longueur d'intervalle qui est affectée aux valeurs de représentation de données audio de l'intervalle respectif de quatrième longueur,
- réception d'un quatrième pointeur temporel affecté à la valeur de représentation d'intervalle audio respective, et
- mémorisation de la valeur de représentation d'intervalle audio respective avec le quatrième pointeur temporel affecté.

10. Procédé selon la revendication 9, dans lequel la première longueur d'intervalle est égale à la troisième longueur d'intervalle et/ou la deuxième longueur d'intervalle est égale à la quatrième longueur d'intervalle.

11. Procédé selon au moins une des revendications précédentes, dans lequel l'objet de données comprend, en plus du flux de données, un flux de données d'objet qui est généré au moyen d'un dispositif qui surveille un paramètre d'un objet, et qui comprend une séquence continue d'enregistrements de données d'objets individuels, le flux de données d'objets provenant du système de traitement de données (5) est reçu, et le procédé comprend les étapes supplémentaires suivantes:
- génération d'une valeur de représentation de données d'objet à la fin d'un intervalle avec une cinquième longueur d'intervalle, qui correspond aux enregistrements de données d'objet affectées au cinquième intervalle de longueur,
- réception d'une cinquième pointeur temporel affecté à la valeur de représentation des données d'objet respectives,
- mémorisation de la valeur de représentation des données d'objet respectives conjointement au cinquième pointeur temporel affecté,
- génération d'une valeur de représentation d'intervalle d'objet à la fin d'un intervalle avec une sixième longueur d'intervalle qui est supérieure à la cinquième longueur d'intervalle qui est affectée aux valeurs de représentation des données d'objet de l'intervalle respectif de sixième longueur,
- réception d'un sixième pointeur temporel affecté à la valeur de représentation d'intervalle d'objet respective, et
- mémorisation de la valeur de représentation d'intervalle d'objet respective avec le sixième pointeur temporel affecté.

12. Procédé selon la revendication 11, dans lequel la cinquième longueur d'intervalle correspond à une fréquence d'horloge du dispositif avec laquelle le paramètre de l'objet est mis à jour.

13. Procédé selon la revendication 11 ou 12, dans lequel le flux de données d'objet est fourni par un dispositif médical qui surveille l'état d'un patient et le flux de données d'objet comprend au moins une valeur du groupe suivant de valeurs du patient: fréquence cardiaque, pression sanguine, fréquence respiratoire et ondes cérébrales.

14. Procédé selon au moins une des revendications précédentes, dans lequel l'objet de données est chiffré après la réception complète du flux de données.

15. Système comprenant un dispositif d'enregistrement vidéo (4), un dispositif de traitement de données (5) et un dispositif de mémorisation de données (6), dans lequel le dispositif d'enregistrement vidéo (4) est configuré pour transmettre un flux de données au dispositif de traitement de données (5) et la configuration du dispositif de traitement de données (5) consiste à traiter le flux de données au moyen d'un procédé selon au moins un des points précédents, puis de l'enregistrer dans le dispositif de mémorisation de données (6) comme un objet de données sécurisé.
